# EUROPÄISCHE PATENTSCHRIFT

(11) **EP 4 264 227 B1**
(45) Veröffentlichungstag und Bekanntmachung des Hinweises auf die Patenterteilung: **02.09.2026**
(21) Anmeldenummer: 21839895.6
(22) Anmeldetag: 15.12.2021
(51) Int. Cl.: G01N 15/10, G01N 15/14

(54) **VERFAHREN ZUM KALIBRIEREN EINES PARTIKELSENSORS, PARTIKELSENSOR UND VORRICHTUNG MIT EINEM PARTIKELSENSOR**
METHOD FOR CALIBRATING A PARTICLE SENSOR, PARTICLE SENSOR AND DEVICE HAVING A PARTICLE SENSOR
PROCÉDÉ D'ÉTALONNAGE D'UN DÉTECTEUR DE PARTICULES, DÉTECTEUR DE PARTICULES ET DISPOSITIF DOTÉ D'UN CAPTEUR DE PARTICULES

(30) Priorität: 18.12.2020 DE 102020216258
(43) Veröffentlichungstag der Anmeldung: 25.10.2023
(73) Patentinhaber: Q.ant GmbH, 70565 Stuttgart (DE)
(72) Erfinder: FOERTSCH, Michael, 91522 Ansbach (DE); HENGESBACH, Stefan, 70469 Stuttgart (DE); GRIMMEL, Jens, 72074 Tübingen (DE); HATTERMANN, Helge, 72124 Pliezhausen (DE)
(74) Vertreter: DREISS Patentanwälte PartG mbB
(86) Internationale Anmeldenummer: PCT/EP2021/085868
(87) Internationale Veröffentlichungsnummer: WO 2022/129158

(56) Entgegenhaltungen:
- US-A- 4 135 821
- US-A- 4 360 270

## Beschreibung

Die Erfindung betrifft ein Verfahren zum Kalibrieren eines Partikelsensors, einen Partikelsensor sowie eine Vorrichtung mit mindestens einem solchen Partikelsensor.

Partikelsensoren dienen zur Charakterisierung von Partikeln, beispielsweise zur Bestimmung einer Partikel-Position, einer Partikel-Geschwindigkeit, einer Partikel-Beschleunigung, einer Partikel-Trajektorie und/oder einer Partikel-Größe. Die Charakterisierung von Partikeln ist für viele Branchen, wie Chemie-, Pharma- oder Halbleiterindustrie von hoher Relevanz.

Partikelsensoren auf Basis optischer Messverfahren, insbesondere mit Laserstrahlung, sind in der Überwachung der Luft- und Flüssigkeitsreinheit weit verbreitet. Die Genauigkeit solcher Partikelsensoren ist jedoch beeinträchtigt, sobald sich Verschmutzungen auf Flächen im optischen Pfad des Laserstrahls anlagern oder sich die Parameter des Lichtstrahls bzw. die Laserparameter ändern. Dadurch wird eine aufwändige Neukalibrierung des Systems notwendig, die sich nicht immer im Feldeinsatz durchführen lässt.

In der US 3,885,415 ist eine Kalibrationsvorrichtung zur automatischen Kalibrierung eines Analysesystems zur Messung von Partikelgeschwindigkeiten beschrieben. Die Kalibrationsvorrichtung umfasst eine Scheibe, die an ihrer Oberfläche Kontrastbereiche zur Modulation der Lichtintensität aufweist. Die Kontrastbereiche werden bewegt, um die Bewegung von Partikeln zu simulieren, die während des Messbetriebs des Analysesystems in eine Messzelle eingebracht sind. Die Scheibe bzw. die Kontrastbereiche können zur Kalibration des Analysesystems in einen Beobachtungsstrahlengang des Analysesystems eingebracht werden. Die Scheibe definiert eine Kalibrationsebene, die in der Nähe einer Fläche angeordnet ist, an der ein Bild der Partikel erzeugt wird. Eine weitere Kalibrationsvorrichtung ist aus dem Dokument US4135821A bekannt.

### Aufgabe der Erfindung

Der Erfindung liegt die Aufgabe zugrunde, ein Verfahren, einen Partikelsensor und eine Vorrichtung mit einem Partikelsensor bereitzustellen, die eine Kalibrierung des Partikelsensors mit hoher Genauigkeit ermöglichen.

### Gegenstand der Erfindung

Diese Aufgabe wird durch ein Verfahren gemäß Anspruch 1 gelöst.

Bei dem erfindungsgemäßen Verfahren werden zur Kalibration des Partikelsensors Kontrastbereiche an einer Kalibrationsscheibe verwendet, die bekannte Eigenschaften, z.B. eine bekannte Größe bzw. einen bekannten Durchmesser, aufweisen. Die Kontrastbereiche dienen zur Simulation von Partikeln bzw. diese bilden Kalibrationspartikel, die im Kalibrationsbetrieb von dem Partikelsensor detektiert werden und die sich von der Umgebung der Kontrastbereiche an der Kalibrationsscheibe durch mindestens eine (optische) Eigenschaft unterscheiden. Die Umgebung der Kontrastbereiche kann beispielsweise durch das Substrat der Kalibrationsscheibe gebildet werden. Die Kontrastbereiche können den Licht- bzw. Laserstrahl z.B. zumindest teilweise streuen, absorbieren, beugen oder reflektieren. Die Umgebung der Kontrastbereiche, beispielsweise in Form des Substrats, unterscheidet sich möglichst stark von den optischen Eigenschaften der Kontrastbereiche und kann den Licht- bzw. Laserstrahl beispielswiese (nahezu vollständig) transmittieren. Ein starker Unterschied zwischen den Kontrastbereichen und der Umgebung ergibt sich z.B. auch, wenn die Kontrastbereiche den Licht- bzw. Laserstrahl reflektieren, während die Umgebung der Kontrastbereiche den Licht- bzw. Laserstrahl absorbiert.

Für die Kalibration wird ausgenutzt, dass die Kontrastbereiche bekannte Eigenschaften, z.B. eine bekannte Größe/Fläche bzw. Geometrie und bekannte optische Eigenschaften hinsichtlich Absorption, Reflektivität, Streuverhalten, etc. aufweisen. Auch die Bewegung der Kalibrationsscheibe bzw. der Kalibrationsintensitätsverteilung in der Kalibrationsebene wird bei der Kalibration vorgegeben und ist daher bekannt. Durch die Bewegung der Kalibrationsscheibe bzw. der Kalibrationsintensitätsverteilung kann daher ein Kalibrationspartikel mit bekannten Eigenschaften entlang einer bekannten Trajektorie bewegt werden. Eine Kalibration des Partikelsensors kann daher z.B. im Hinblick auf die Messgrößen Partikel-Größe, Partikel-Material, Partikel-Trajektorie, Partikel-Geschwindigkeit, Partikel-Beschleunigung etc. erfolgen.

Im Sinne dieser Anmeldung wird unter einer Kalibration des Partikelsensors auch eine Überprüfung einer bereits bestehenden Kalibration des Partikelsensors verstanden. Für den Fall, dass sich bei der Überprüfung herausstellt, dass die bestehende Kalibration fehlerhaft ist, was z.B. auf eine Verschmutzung von Flächen im Strahlengang des Licht- bzw. Laserstrahls oder auf eine Veränderung der Parameter des Licht- bzw. Laserstrahls zurückzuführen sein kann (s.o.), kann eine Re-Kalibrierung des Partikelsensors vorgenommen werden.

Der Partikelsensor charakterisiert das Kalibrationspartikel auf dieselbe Weise wie ein Partikel, das ein Messvolumen des Partikelsensors durchläuft, d.h. es wird mit der Kalibrationsscheibe ein Durchflug eines Partikels durch den Partikelsensor simuliert. Für den Fall, dass bei der Bewegung der Kalibrationsscheibe oder der Kalibrationsintensitätsverteilung der Licht- bzw. Laserstrahl auf ein Kalibrationspartikel bzw. einen Kontrastbereich trifft, bewirkt dies typischerweise eine Abschwächung des erfassten Intensitätssignals. Die Abschwächung des Intensitätssignals ist typischerweise umso größer, je größer die Fläche des Kalibrationspartikels ist. Die Abschwächung des Intensitätssignals kann insbesondere proportional zur Fläche des Kalibrationspartikels sein.

Der Licht- bzw. Laserstrahl wird auf die Kalibrationsebene ausgerichtet. Bei dem Licht- bzw. Laserstrahl, der die Kalibrationsintensitätsverteilung in der Kalibrationsebene erzeugt, kann es sich beispielsweise um einen kollimierten Licht- bzw. Laserstrahl handeln. Für den Fall, dass Partikel mit einem vergleichsweise kleinen Partikeldurchmesser charakterisiert werden sollen, ist es günstig, den Licht- bzw. Laserstrahl in der Kalibrationsebene zu fokussieren. In diesem Fall bildet die Kalibrationsintensitätsverteilung in der Kalibrationsebene einen Kalibrationsfokus.

Das weiter oben beschriebene Kalibrationsverfahren kann bei einer Vielzahl von Partikelsensoren eingesetzt werden, die auf der Basis von optischer Strahlung, insbesondere Laserstrahlung, funktionieren. Beispielsweise kann das Kalibrationsverfahren bei einer Sensoranordnung bzw. bei einem Partikelsensor verwendet werden, wie er in der DE 10 2019 209 213.6 beschrieben ist, die durch Bezugnahme in ihrer Gesamtheit zum Inhalt dieser Anmeldung gemacht wird. Bei dem dort beschriebenen Partikelsensor wird eine Moden-Konversionseinrichtung zur Erzeugung einer Feldverteilung des Laserstrahls verwendet, die an jeder Position der Feldverteilung eine unterschiedliche Kombination einer lokalen Intensität und einer lokalen Polarisationsrichtung des Laserstrahls aufweist. Eine Analysator-Optik dient zur Ermittlung von polarisationsabhängigen Intensitätssignalen der Feldverteilung des Laserstrahls, die einen Messbereich durchlaufen hat. Die Partikel werden anhand der polarisationsabhängigen Intensitätssignale charakterisiert, wobei ausgenutzt wird, dass die Feldverteilung bzw. die optischen Moden der Feldverteilung eine eindeutige Korrelation zwischen der lokalen Intensitätsverteilung und der lokalen Polarisationsrichtung aufweisen. Es versteht sich aber, dass auch andere Arten von Partikelsensoren, die auf der Basis von optischer Strahlung, beispielsweise von Laserstrahlung, bzw. der Abschwächung von optischer Strahlung, beispielsweise von Laserstrahlung, beim Durchlaufen eines Messvolumens beruhen, mit Hilfe des hier beschriebenen Kalibrationsverfahrens kalibriert werden können.

Bei einer Variante, die nicht Teil der beanspruchten Erfindung ist, wird die Kalibrationsscheibe in einer Kalibrationsebene innerhalb eines Messvolumens angeordnet, das im Messbetrieb des Partikelsensors von den Partikeln durchlaufen wird. Bei dieser Variante wird die Kalibrationsscheibe von außen in das Messvolumen eingeführt, durch das im Messbetrieb die Partikel strömen. Die Kalibrierung erfolgt in diesem Fall außerhalb des Messbetriebs, um den Partikelsensor vor der Inbetriebnahme oder während einer Wartung zu kalibrieren. Diese Variante erfordert es, dass das Messvolumen von außen zugänglich ist, um die Kalibrationsscheibe zu positionieren, was nicht in jedem Fall möglich ist.

Gemäß der Erfindung werden die Kalibrationsintensitätsverteilung, insbesondere ein Kalibrationsfokus, in der Kalibrationsebene und eine Messintensitätsverteilung, insbesondere ein Messfokus, in einer Messebene aufeinander abgebildet. Die Messebene ist in einem Messvolumen gebildet, das im Messbetrieb des Partikelsensors von den Partikeln durchlaufen wird. In diesem Fall wird die Kalibrationsscheibe nicht in das Messvolumen eingebracht, sondern ist im Strahlengang des Licht- bzw. Laserstrahls von dem Messvolumen beabstandet angeordnet. Der Licht- bzw. Laserstrahl kann in der Messebene fokussiert werden, so dass die Messintensitätsverteilung einen Messfokus bildet, dies ist aber nicht zwingend erforderlich. Die Abbildung der Kalibrationsintensitätsverteilung bzw. des Kalibrationsfokus und der Messintensitätsverteilung bzw. des Messfokus aufeinander kann mit Hilfe einer Strahlformungseinrichtung in Form einer abbildenden Optik erfolgen. Durch die abbildende Optik wird eine Intensitätsverteilung bzw. ein Doppelfokus mit vergleichbaren Strahlparametern (Strahlradius etc.) erzeugt. In einen der beiden Foki (Kalibrationsfokus) kann beispielsweise die Kalibrationsscheibe eingebracht werden, der zweite Fokus (Messfokus) befindet sich im Messvolumen, durch das die zu charakterisierenden Partikel strömen. Durch die Kenntnis der Strahlradien der Kalibrationsintensitätsverteilung bzw. des Kalibrationsfokus und der Messintensitätsverteilung bzw. des Messfokus lässt sich nach der Kalibration mit Hilfe der Kalibrationspartikel bzw. der Kontrastbereiche der Kalibrationsscheibe die Größe der Partikel im Messvolumen berechnen. Unter der Partikel-Größe eines Partikels wird die Querschnittsfläche eines Partikels in der Messebene verstanden.

Daher kann die Kalibrationsscheibe in den Partikelsensor integriert werden, so dass sich die Kalibration im Feldeinsatz des Partikelsensors überprüfen und wiederholen lässt. Im Messbetrieb des Partikelsensors wird die Kalibrationsscheibe nicht bewegt und entweder aus dem Strahlengang des Licht- bzw. Laserstrahls entfernt oder so positioniert, dass keine zu starke Abschwächung des Licht- bzw. Laserstrahls erfolgt. Beispielsweise kann die Kalibrationsscheibe so positioniert werden, dass der Licht- bzw. Laserstrahl die Kalibrationsscheibe an einem transparenten Bereich des Substrats durchläuft, an dem kein Kontrastbereich gebildet ist.

Daher bildet nicht nur die Messintensitätsverteilung bzw. der Messfokus in der Messebene eine Art "virtuelle Sensorfläche", die eine Remote-Charakterisierung der Partikel ermöglicht, ohne den Sensor am Ort der Partikel positionieren zu müssen, auch die Kalibrationsintensitätsverteilung bzw. der Kalibrationsfokus in der Kalibrationsebene ermöglicht eine Kalibration, ohne die Kalibrationspartikel in die Messebene bzw. in das Messvolumen einzubringen. Bei dieser Variante wird somit eine Ferndiagnose bzw. eine Fernkalibrierung des Partikelsensors ermöglicht.

Bei einer Weiterbildung ist die Kalibrationsscheibe in einem vom Messvolumen separierten Gehäuse angeordnet. Es ist günstig, die Kalibrationsscheibe in einem vom Messvolumen hermetisch separierten Volumen anzuordnen, um die Kalibrationsscheibe vor Verschmutzung durch die Partikel zu schützen, die das Messvolumen durchströmen.

Bei einer weiteren Variante weisen die Kontrastbereiche an der Kalibrationsscheibe unterschiedliche Flächeninhalte auf. Die unterschiedlichen Flächeninhalte bzw. Größen der Kontrastbereiche simulieren Kalibrationspartikel mit unterschiedlichen, vorbekannten Partikel-Größen bzw. Partikel-Durchmessern. Die Größe der Kontrastbereiche wird an die Art der zu charakterisierenden Partikel bzw. an die Art des Partikelsensors angepasst. Die Kalibration mit verschieden großen Kontrastbereichen bzw. Kalibrationspartikeln auf der Kalibrationsscheibe ermöglicht eine hohe Genauigkeit bei der späteren Partikel-Messung über einen weiten Größenbereich.

Bei einer weiteren Variante sind die Kontrastbereiche durch Mikrostrukturen an der Oberfläche eines Substrats, insbesondere eines Wafers, gebildet. In diesem Fall kann die Kalibrationsscheibe ein Substrat z.B. aus Glas oder aus einem Kristall aufweisen, an dem Kontrastbereiche in Form von Mikrostrukturen mit bekannten Strukturgrößen gebildet sind, die in der Art von Kalibrationspartikeln wirken. Die Mikrostrukturen können beispielsweise durch Mikrolithographie an der Oberfläche eines transparenten Substrats, z.B. in Form eines Glas-Wafers, aufgebracht werden. Die Kontrastbereiche können für den Licht- bzw. Laserstrahl zumindest teilweise absorbierende oder reflektierende bzw. streuende Strukturen bilden. Durch die Mikrostrukturierung ist sowohl die Form als auch die Größe bzw. der Flächeninhalt der Kontrastbereiche mit hoher Präzision bekannt, so dass diese als Kalibriernormal verwendet werden können. Die Mikrostrukturierung kann an einer Schicht, z.B. an einer Metallschicht, erfolgen, die auf das Substrat aufgebracht ist, es ist aber auch möglich, dass das Substrat selbst mikrostrukturiert wird. Für den Abgleich der Größen der durch die Mikrostrukturierung erzeugten Kontrastbereiche kann die Kalibration, die mit Hilfe der Kalibrationsscheibe durchgeführt wird, ggf. mit Hilfe von Normpartikeln definierter Größe, beispielsweise mit Hilfe von Polystyrol-Kugeln bekannter Größe, verifiziert werden.

Bei einer alternativen Variante sind die Kontrastbereiche durch Kalibrationspartikel, insbesondere mit vorgegebener Partikelgröße, gebildet, wobei die Kalibrationspartikel bevorzugt mindestens zwei Gruppen von Kalibrationspartikeln mit unterschiedlichen optischen Eigenschaften aufweisen, wobei die Kalibrationspartikel der mindestens zwei Gruppen insbesondere aus unterschiedlichen Materialien gebildet sind. Bei den unterschiedlichen optischen Eigenschaften kann es sich beispielsweise um einen unterschiedlichen (komplexen) Brechungsindex handeln, der dazu führt, dass die Kalibrationspartikel das Licht bzw. die Laserstrahlung unterschiedlich absorbieren, reflektieren, streuen und/oder beugen. Die Verwendung von Kalibrationspartikeln, die aus unterschiedlichen Materialien gebildet sind, ermöglicht es, die Kalibration des Partikelsensors für die Detektion von Partikeln aus unterschiedlichen Materialien bzw. Materialklassen durchzuführen, ohne dass zu diesem Zweck unterschiedliche Kalibrationsscheiben benötigt werden.

Bei den Materialien, aus denen die Kalibrationspartikel einer jeweiligen Gruppe gebildet sind, kann es sich beispielsweise um Metalle (z.B. Stahl), Sand (z.B. SiO₂), Kunststoff (z.B. um Polystyrol oder um Latex), Keramiken, etc. handeln, da diese Materialien sich in ihren optischen Eigenschaften typischerweise deutlich unterscheiden. Bei den drei Materialklassen Metalle, Sand und Kunststoffe handelt es sich um typische Bestandteile von Stäuben.

Die Kalibrationspartikel können in diesem Fall z.B. mit einer vorgegebenen Verteilung bzw. mit einem vorgegebenen Muster (bzw. in vorgegebenen Oberflächenbereichen bzw. Feldern) auf die Kalibrationsscheibe aufgebracht sein, ggf. können die Kalibrationspartikel der unterschiedlichen Gruppen aber auch statistisch verteilt aufgebracht sein (s.u.). Es ist selbstverständlich auch möglich, nur eine Art von Kalibrationspartikeln, ggf. mit unterschiedlichen vorgegebenen Partikelgrößen, auf die Kalibrationsscheibe aufzubringen.

Bei einer Weiterbildung dieser Variante sind die Kalibrationspartikel statistisch verteilt an der Oberfläche eines Substrats aufgebracht und/oder die Kalibrationspartikel werden durch Selbststrukturierung an der Oberfläche des Substrats gebildet.

Im ersten Fall ist zwar die Größe der Kalibrationspartikel bekannt, die exakte Verteilung auf der Oberfläche ist aber nicht im Voraus bekannt, vielmehr werden die Kalibrationspartikel beim Aufbringen auf die Oberfläche statistisch verteilt. Die Kalibrationspartikel, d.h. Partikel mit bekannter Größe, können in diesem Fall z.B. in geringer Konzentration in flüssigem, transparentem Klebstoff suspendiert werden und als dünne Schicht auf die Kalibrationsscheibe bzw. auf das Substrat aufgebracht werden. Nach dem Trocknen des Klebstoffs sind die Kalibrationspartikel statistisch über die Kalibrationsscheibe verteilt. Als Kalibrationspartikel bieten sich bei dieser Variante insbesondere sphärische, monodisperse Partikel bekannter Größe an, z.B. Polystyrol-Latex-Kügelchen, welche als Standard für Teilchengrößenmessung etabliert sind und mit schmaler Größenverteilung erhältlich sind. Derartige Kalibrierpartikel werden z.B. zur Kalibrierung von Partikelzählern gemäß der Norm ISO 21501 verwendet, vgl. den Link "de.wikipedia.org/wiki/ISO_21501".

Im zweiten Fall wird der Klebstoff oder ein Photolack mittels eines Dispensers auf das scheibenförmige Substrat aufgebracht. Vor der Aushärtung (speziell mit UV-Licht oder im Ofen) formt dieser Photolack oder Klebstoff in Abhängigkeit von seiner Viskosität durch die Oberflächenspannung Kugelsegmente bis hin zu Halbkugeln. Die auf diese Weise, d.h. durch Selbststrukturierung, erzeugte dreidimensionale Struktur der Kalibrationspartikel ermöglicht die Annäherung an das Streuverhalten von Partikeln mit kugelförmiger Oberfläche und eignet sich daher insbesondere für Partikelsensoren, die auf dem Prinzip der Streulichtmessung beruhen. Die Strukturgröße der auf diese Weise erzeugten Kalibrationspartikel hängt von den Prozessparametern u.a. bei der Aushärtung des Photolacks oder Klebstoffs ab und kann daher bei gegebenen Prozessparametern als bekannt vorausgesetzt werden. Das scheibenförmige Substrat kann zusätzlich vor dem Aufbringen des Klebers gereinigt, beschichtet oder laserstrukturiert werden, so dass sich eine hydrophile oder hydrophobe Oberfläche zur angepassten Ausformung der Tröpfchen ergibt.

Bei einer weiteren Variante wird die Kalibrationsscheibe beim Bewegen in der Kalibrationsebene automatisiert gedreht und/oder automatisiert verschoben.

Die Kalibrationsscheibe kann gedreht bzw. um eine vorgegebene Drehachse rotiert werden, um diese in der Kalibrationsebene zu bewegen und die Bewegung eines Partikels zu simulieren. Die automatisiete Drehung der Kalibrationsscheibe kann beispielsweise mit Hilfe eines Elektromotors erfolgen. Bei einer geeignet im Durchmesser dimensionierten Kalibrationsscheibe bewegen sich die Kalibrationspartikel in diesem Fall annähernd linear durch den Licht- bzw. Laserstrahl des Partikelsensors und bewirken eine Abschwächung der Intensität des Licht- bzw. Laserstrahls, die in der Regel proportional zur Fläche des Kontrastbereichs bzw. des Kalibrationspartikels ist. Die Kalibrationsscheibe ist in diesem Fall typischerweise kreisförmig ausgebildet und kann beispielsweise einen Durchmesser zwischen 10 mm und 100 mm aufweisen. Die Kalibrationsscheibe kann beispielsweise mit einer Frequenz zwischen 0,1 Hz und 200 Hz rotiert werden. An der Kalibrationsscheibe können z.B. zwischen 1 und 400 Kalibrationspartikel pro Umdrehung angebracht sein. Die Kalibrationspartikel können beispielsweise rund sein und durch ein lithographisches Verfahren aufgebracht wurden. Der Licht- bzw. Laserstrahl kann an der Kalibrationsintensitätsverteilung bzw. an dem Kalibrationsfokus beispielsweise einen Durchmesser zwischen 20 µm und 200 µm aufweisen. Die Durchmesser der Kalibrationspartikel sind typischerweise zwischen 0,05 % und 100 % des Fokus- bzw. Strahldurchmessers.

Die Kalibrationsscheibe kann auch in der Kalibrationsebene linear verschoben werden. Zur automatisierten Verschiebung kann in diesem Fall beispielsweise ein Piezo-Antrieb bzw. ein Piezo-Kristall oder ein Linearantrieb verwendet werden. Die Verwendung eines Piezo-Antriebs zur Verschiebung der Kalibrationsscheibe hat sich als vorteilhaft erwiesen, da dieser verschleißfrei arbeitet und daher keine Messfehler durch einen Abrieb erzeugt, der sich ansonsten auf der Kalibrationsscheibe ablagern könnte. Die Frequenz der Verschiebung der Kalibrationsscheibe kann beispielsweise in der Größenordnung zwischen 1 Hz und 100 Hz liegen. Die Kalibrationsscheibe kann in diesem Fall beispielsweise eine rechteckige Geometrie aufweisen.

Alternativ oder zusätzlich kann auch die Kalibrationsintensitätsverteilung bzw. der Kalibrationsfokus des Licht- bzw. Laserstrahls in der Kalibrationsebene bewegt werden. Für die Bewegung der Kalibrationsintensitätsverteilung kann der Licht- bzw. Laserstrahl eine Scanbewegung ausführen, beispielsweise indem dieser mit Hilfe von Spiegelscannern bzw. Scannerspiegeln, mit Hilfe eines Akusto-Optischen Modulators, etc. umgelenkt wird, um die Position der Kalibrationsintensitätsverteilung in der Fokusebene zu variieren. In diesem Fall kann die Kalibrationsscheibe ortsfest angeordnet werden, dies ist aber nicht zwingend der Fall, d.h. es kann auch eine überlagerte Bewegung der Kalibrationsscheibe und der Kalibrationsintensitätsverteilung erfolgen.

Ein weiterer Aspekt der Erfindung betrifft einen Partikelsensor gemäß Anspruch 8.

Wie weiter oben in Zusammenhang mit dem Verfahren beschrieben wurde, wird im Kalibrationsbetrieb des Partikelsensors mit Hilfe der Kontrastbereiche die Bewegung von Partikeln simuliert. Anhand des bzw. der erfassten Intensitätssignale kann bei bekannter Größe der Kontrastbereiche bzw. der Kalibrationspartikel eine Kalibration des Partikelsensors durchgeführt werden. Bei der Kalibration können die jeweils erfassten Intensitätssignale als charakteristisch für eine bestimmte Partikelgröße bzw. für bestimmte Partikel-Geschwindigkeiten und/oder Partikel-Trajektorien gespeichert werden und als Kalibrationsnormal dienen. Im Messbetrieb des Partikelsensors kann dieses Kalibrationsnormal zur Charakterisierung von Partikeln verwendet werden, die ein Messvolumen durchlaufen.

Bei dem hier beschriebenen Partikelsensor kann die Charakterisierung der Partikel in Transmission erfolgen, d.h. der Licht- bzw. Laserstrahl wird vom Sender ausgesandt und durchläuft das Messvolumen in Transmission. Es ist aber auch möglich, dass der Partikelsensor eine Charakterisierung der Partikel durch eine Streuung und/oder Absorption des Licht- bzw. Laserstrahls an den Partikeln vornimmt. In den beiden letztgenannten Fällen wird der reflektierte bzw. gestreute Licht- bzw. Laserstrahl an dem Detektor des Empfängers detektiert.

Bei einer Ausführungsform, die nicht Teil der beanspruchten Erfindung ist, ist die Kalibrationsscheibe in einer Kalibrationsebene angeordnet, die sich in einem Messvolumen befindet, das in einem Messbetrieb des Partikelsensors von den Partikeln durchlaufen wird. Wie weiter oben beschrieben wurde, ist die Kalibrationsscheibe in diesem Fall typischerweise nur im Kalibrationsbetrieb in dem Messvolumen angeordnet. Im Messbetrieb des Partikelsensors wird die Kalibrationsscheibe entweder automatisiert oder manuell aus dem Messvolumen entfernt.

Gemäß der Erfindung umfasst die Optik des Partikelsensors eine abbildende Optik zum Abbilden der Kalibrationsintensitätsverteilung in der Kalibrationsebene und einer Messintensitätsverteilung, insbesondere eines Messfokus, in einer Messebene aufeinander, wobei die Messebene in einem Messvolumen gebildet ist, das in einem Messbetrieb des Partikelsensors von den Partikeln durchlaufen wird. Bei dieser Ausführungsform ist die Kalibrationsscheibe in der Regel dauerhaft in den Partikelsensor, typischerweise in den Sender des Partikelsensors, integriert. Die Kalibrationsscheibe kann in diesem Fall ggf. vor der Aufnahme des Kalibrationsbetriebs automatisiert in den Strahlengang des Licht- bzw. Laserstrahls eingebracht werden, es ist aber auch möglich, dass die Kalibrationsscheibe dauerhaft im Strahlengang des Laserstahls angeordnet ist. In diesem Fall wird die Kalibrationsscheibe so positioniert, dass diese die Durchführung des Messbetriebs möglichst wenig stört. Beispielsweise kann in diesem Fall die Position, an welcher der Licht- bzw. Laserstrahl auf die Kalibrationsscheibe trifft, sich an einer Stelle befinden, an der kein Kontrastbereich angeordnet ist.

Bei einer weiteren Ausführungsform weist der Sender ein Gehäuse mit einem Austrittsfenster auf und der Empfänger weist ein Gehäuse mit einem Eintrittsfenster auf, zwischen denen das Messvolumen gebildet ist. In diesem Fall ist die Kalibrationsscheibe typischerweise im Gehäuse des Senders oder des Empfängers angeordnet und hermetisch vom Messvolumen getrennt. Dies ist günstig, um eine Verschmutzung der Kalibrationsscheibe durch die Partikel zu verhindern, die das Messvolumen durchlaufen. Die Anordnung der Kalibrationsscheibe im Empfänger ist bevorzugt, da aufgrund einer Verschmutzung des Eintritts- bzw. des Austrittsfensters eine Leistungsverringerung des Licht- bzw. Laserstrahls auftreten kann. Die Kalibration kann in diesem Fall mit der bereits reduzierten Leistung und mit den möglichen optischen Störungen des Licht- bzw. Laserstrahls durch den Schmutz auf dem Eintritts- bzw. Austrittsfenster erfolgen.

Die Kalibrationsscheibe kann auf die weiter oben in Zusammenhang mit dem Verfahren ausgebildete Weise ausgestaltet sein. Beispielsweise können die Kontrastbereiche unterschiedliche Flächeninhalte aufweisen. Auch können die Kontrastbereiche ausgebildet sein, den Licht- bzw. Laserstrahl zumindest teilweise zu streuen, zu absorbieren oder zu reflektieren. Die Kontrastbereiche an der Kalibrationsscheibe können durch Mikrostrukturierung gebildet sein. Es ist auch möglich, dass die Kontrastbereiche durch Kalibrationspartikel mit vorgegebener Partikelgröße gebildet sind, die ggf. statistisch verteilt an der Oberfläche eines Substrats der Kalibrationsscheibe aufgebracht sind, oder dass Gruppen von Kalibrationspartikeln mit unterschiedlichen Eigenschaften auf der Kalibrationsscheibe vorgesehen sind.

Bei einer weiteren Ausführungsform ist die Bewegungseinrichtung zur Drehung der Kalibrationsscheibe in der Kalibrationsebene ausgebildet. Die Bewegungseinrichtung kann in diesem Fall beispielsweise als Elektromotor ausgebildet sein, welcher an einer Drehachse angreift, an der die Kalibrationsscheibe befestigt ist.

Bei einer weiteren Ausführungsform ist die Bewegungseinrichtung zur Verschiebung der Kalibrationsscheibe in der Kalibrationsebene ausgebildet. In diesem Fall kann die Bewegungseinrichtung beispielsweise als Piezo-Aktuator ausgebildet sein, der z.B. an einem seitlichen Rand der Kalibrationsscheibe angreift, um diese in der Kalibrationsebene zu verschieben. Der Piezo-Aktor ermöglicht eine abriebsfreie Bewegung der Kalibrationsscheibe in der Kalibrationsebene.

Ein weiterer Aspekt der Erfindung betrifft eine Vorrichtung, insbesondereeine EUV-Strahlungserzeugungsvorrichtung, umfassend: eine Messkammer, der Partikel, beispielsweise in einem Zielbereich, zuführbar sind, sowie einen Partikelsensor, der wie weiter oben beschrieben ausgebildet ist, zur Charakterisierung der Partikel in der Messkammer.

Wie weiter oben beschrieben wurde, kann der Partikelsensor in einer Vielzahl von Anwendungsfeldern eingesetzt werden, um feste, flüssige oder gasförmige Partikel bzw. Partikelströme zu charakterisieren. Die Messkammer kann beispielsweise zur Aufnahme bzw. zur Durchströmung mit einem Gas oder mit einer Flüssigkeit ausgebildet sein. In ersten Fall kann die Vorrichtung beispielsweise zur Messung der Luftreinheit, beispielsweise zur Charakterisierung von Ruß-Partikeln bzw. zur Feinstaubmessung, dienen. Auch die Charakterisierung von Pulvern z.B. hinsichtlich ihrer Pulver- bzw. Korngrößenverteilung ist möglich, beispielsweise bei Pulvern, die zur generativen Fertigung (3D-Druck) verwendet werden oder bei Baustoffen, beispielsweise bei Zement. Auch die Charakterisierung von Partikeln in Flüssigkeiten ist möglich, z.B. die Charakterisierung von Partikeln in Form von Bakterien in Milch. Bei allen diesen Anwendungen bzw. Vorrichtungen kann maschinelles Lernen eingesetzt werden, um die Partikel zu charakterisieren bzw. um die Kalibration durchzuführen. Beim maschinellen Lernen werden Testdaten erzeugt und eine geeignete KI, z.B. in Form eines neuronalen Netzwerks oder dergleichen, angelernt.

Der Partikelsensor kann auch in der Halbleiterindustrie eingesetzt werden. Beispielsweise kann der Partikelsensor zur Charakterisierung von Partikeln bzw. von Partikelströmen in einer Messkammer in Form einer Vakuum-Kammer einer EUV-Strahlungserzeugungsvorrichtung verwendet werden. Eine solche EUV-Strahlungserzeugungsvorrichtung weist in der Regel eine Treiberlaseranordnung zur Erzeugung eines Treiber-Laserstrahls sowie eine Strahlzuführungseinrichtung zur Zuführung des Treiber-Laserstrahls zu der weiter oben beschriebenen Vakuum-Kammer auf. Der Treiber-Laserstrahl wird in einem Zielbereich der Vakuum-Kammer fokussiert, in der ein Target-Material in Form von Zinn-Partikeln bzw. von Zinn-Tröpfchen eingebracht ist bzw. zugeführt wird. Ein jeweiliges Partikel geht bei der Bestrahlung mit dem Treiber-Laserstrahl in einen Plasma-Zustand über und emittiert hierbei EUV-Strahlung. Die Partikel des Target-Materials, welche zu dem Zielbereich geführt werden, sowie die Partikel, die beim Auftreffen des Laserstrahls auf das Target-Material (beim Zerstäuben des Target-Materials) erzeugt werden, können mit Hilfe des weiter oben beschriebenen Partikelsensors charakterisiert werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: schematische Darstellungen einer Kalibrationsscheibe, die zur Kalibration eines Partikelsensors dient, und zur Rotation bzw. zur Verschiebung in einer Kalibrationsebene ausgebildet ist,
- Fig. 2a,b: schematische Darstellungen der Kalibrationsscheibe von Fig. 1a,b, die in einer Kalibrationsebene in einem Messvolumen des Partikelsensors angeordnet ist,
- Fig. 3: eine schematische Darstellung eines Partikelsensors, der eine abbildende Optik zur Abbildung eines Kalibrationsfokus in einer Kalibrationsebene und eines Messfokus in einer Messebene aufeinander aufweist, wobei die Messebene in einem Messvolumen des Partikelsensors gebildet ist, sowie
- Fig. 4: eine schematische Darstellung einer EUV-Strahlungserzeugungsvorrichtung, die einen Partikelsensor zur Charakterisierung von Partikeln in einer Vakuum-Kammer aufweist.

In der folgenden Beschreibung der Zeichnungen werden für gleiche bzw. funktionsgleiche Bauteile identische Bezugszeichen verwendet.

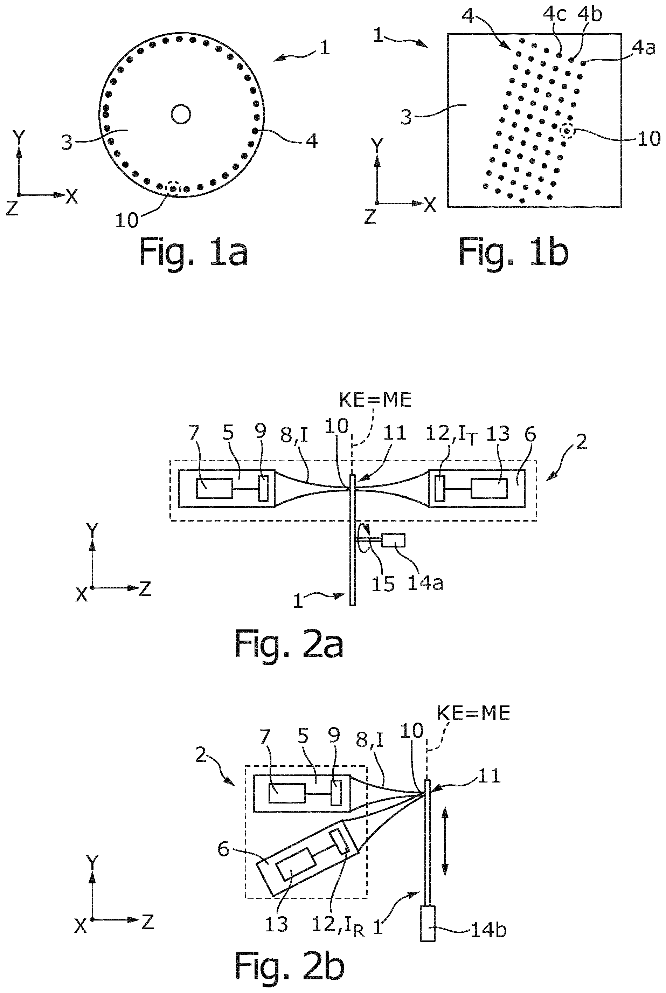

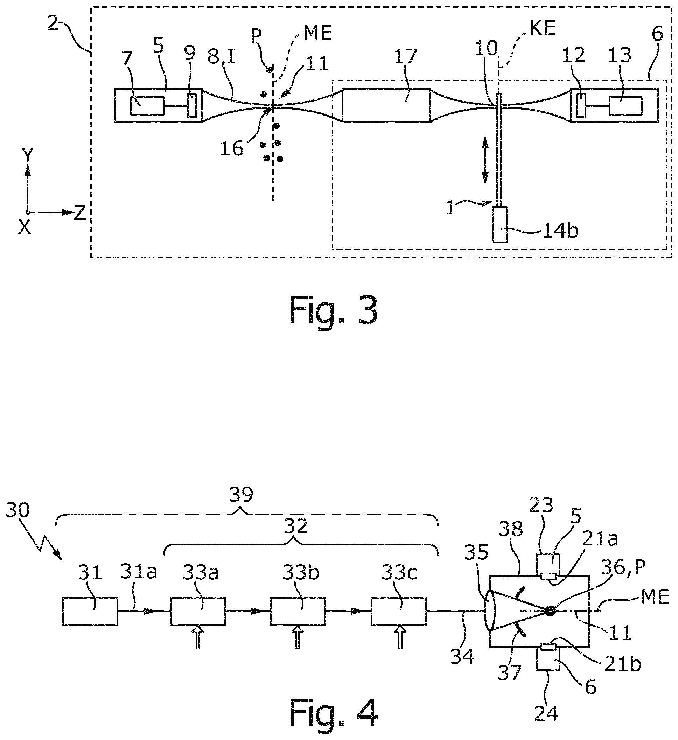

**Fig. 1a** und **Fig. 1b** zeigen jeweils eine Kalibrationsscheibe 1 zur Kalibration eines Partikelsensors 2, der in **Fig. 2a****,****b** und in **Fig. 3** dargestellt ist. Die Kalibrationsscheibe 1 weist ein transparentes Substrat 3 in Form eines Kristallwafers, eines Glaswafers oder einer Kunststoffscheibe auf. An dem Substrat 3, genauer gesagt an einer planen Oberfläche des Substrats 3, sind im gezeigten Beispiel kreisförmige Kontrastbereiche 4 gebildet. Die Kontrastbereiche 4 weisen eine vorbekannte Größe und Geometrie auf und dienen als Kalibrationspartikel zur Kalibrierung des Partikelsensors 2.

Der in Fig. 2a,b bzw. in Fig. 3 gezeigte Partikelsensor 2 weist einen Sender 5 und einen Empfänger 6 auf. Der Sender 5 umfasst eine Laserquelle 7, die zur Erzeugung eines Laserstrahls 8 dient. An Stelle einer Laserquelle 7 kann ggf. eine andere Art von Lichtquelle verwendet werden, die einen Lichtstrahl bzw. optische Strahlung erzeugt, bei der es sich nicht um Laserstrahlung handelt. Bei der Lichtquelle kann es sich beispielsweise um eine LED oder dergleichen handeln.

Bei der Laserquelle 7 handelt es sich im gezeigten Beispiel um einen Diodenlaser, der eine Laser-Wellenlänge aufweist, die abhängig von der Anwendung aus einem Wellenlängen-Bereich zwischen ca. 250 nm und ca. 1600 nm ausgewählt ist. Der Laserstrahl 8 wird mit Hilfe einer Optik in Form einer Fokussieroptik 9 auf einen Kalibrationsfokus 10 in einer Kalibrationsebene KE fokussiert, in der die Kalibrationsscheibe 2 angeordnet ist. Der Kalibrationsfokus 10 bildet in der Kalibrationsebene KE eine Kalibrationsintensitätsverteilung. Beim Durchlaufen der Kalibrationsscheibe 1, genauer gesagt der Kontrastbereiche 4, trifft der Laserstrahl 8 auf die Kontrastbereiche 4 und wird in seiner Intensität I moduliert. Die Modulation der Intensität I kann z.B. durch eine gegenüber dem Substrat 3 verringerte Transparenz der Kontrastbereiche 4, durch einen modifizierten Brechungsindex der Kontrastbereiche 4 gegenüber dem Substrat 3, ... realisiert werden.

Bei dem in Fig. 1a gezeigten Beispiel sind die Kontrastbereiche 4 aus einem den Laserstrahl 8 absorbierenden Material gebildet, während das Substrat 3 der Kalibrationsscheibe 1 aus einem für die Wellenlänge des Laserstrahls 8 transparenten Material gebildet ist. Trifft der Laserstrahl 8 auf einen jeweiligen Kontrastbereich 4, nimmt die Intensität I des Laserstrahls 8 beim Durchlaufen der Kalibrationsscheibe 1 ab.

Die in Fig. 1a gezeigte Kalibrationsscheibe 1 bzw. die Kalibrationsebene KE ist in einem Messvolumen 11 des in Fig. 2a gezeigten Partikelsensors 2 angeordnet. Der Empfänger 6 des Partikelsensors 2 von Fig. 2a ist entlang der Propagationsrichtung Z (Z-Richtung eines XYZ-Koordinatensystems) entlang einer Sichtlinie zur Laserquelle 7 bzw. zum Empfänger 6 angeordnet und weist einen Detektor 12 auf, der zum Erfassen eines von der Kalibrationsscheibe 1 transmittierten Intensitätssignals I_{T} des Laserstrahls 8 dient. Eine Auswerteeinrichtung 13 dient zur Auswertung des Intensitätssignals I_{T} des Laserstrahls 8.

Im Gegensatz zu der in Fig. 1a der in Fig. 1b gezeigten Kalibrationsscheibe 1 sind die Kontrastbereiche 4 aus einem für die Wellenlänge des Laserstrahls 8 reflektierenden Material gebildet. Die in Fig. 1b gezeigte Kalibrationsscheibe 1 ist in einer Kalibrationsebene KE des in Fig. 2b gezeigten Partikelsensors 2 angeordnet, der sich von dem in Fig. 2a gezeigten Partikelsensor 2 im Wesentlichen dadurch unterscheidet, dass der Empfänger 6 unter einem Winkel zur Propagationsrichtung des von der Laserquelle 7 erzeugten Laserstrahls 8 angeordnet ist, so dass der Detektor 12 ein Intensitätssignal I_{R} des an den Kontrastbereichen 4 reflektierten Laserstrahls 8 detektiert. Es ist auch möglich, dass der Detektor 12 des Partikelsensors 2 von Fig. 2b zur Detektion von Streustrahlung des an den Kontrastbereichen 4 gestreuten Laserstrahls 8 dient.

Die in Fig. 1a,b gezeigte Fokussierung des Laserstrahls 8 in der Kalibrationsebene KE dient zur Erzeugung eines kleinen Strahldurchmessers des Laserstrahls 8 in der Kalibrationsebene KE. Auf die Fokussierung kann ggf. verzichtet werden, wenn vergleichsweise große Partikel mit dem Partikelsensor 2 detektiert werden sollen. In diesem Fall kann der Laserstrahl 8 ggf. kollimiert oder sogar divergent auf die Kalibrationsebene KE eingestrahlt werden. An Stelle der Fokussieroptik 9 wird in diesem Fall eine andere Art von Optik, z.B. eine kollimierende Optik, verwendet.

Um ein möglichst genaues Kalibriernormal für die Kalibrierung des Partikelsensors 2 zu bilden, sind bei dem in Fig. 1a gezeigten Beispiel die Kontrastbereiche 4 in Form von Mikrostrukturen ausgebildet. Die Mikrostrukturen werden durch die mikrolithographische Strukturierung einer Metallschicht gebildet, die auf die Oberfläche des Substrats 3 aufgebracht wurde und die mit Ausnahme der kreisförmigen Kontrastbereiche 4 bei der Mikrostrukturierung wieder von der Oberfläche der Kalibrationsscheibe 1 entfernt wurde. Die Mikrostrukturierung ermöglicht es, die Größe der Kontrastbereiche 4 bzw. der Kalibrationspartikel und deren Abstände zueinander präzise vorzugeben, um die Präzision bei der Kalibration des Partikelsensors 2 zu erhöhen. Beim gezeigten Beispiel weisen die Kontrastbereiche 4 unterschiedlich große Flächenbereiche bzw. unterschiedlich große Durchmesser auf, um unterschiedlich große Partikel zu simulieren und auf diese Weise die Genauigkeit des Partikelsensors 2 für unterschiedliche Partikel-Größen, insbesondere über einen weiten Größenbereich, zu ermöglichen. Alternativ zur Herstellung der Kontrastbereiche 4 durch Mikrostrukturierung können diese auch durch eine Ultrakurzpuls-Bearbeitung, etc. an der Kalibrationsscheibe 1 gebildet werden.

Bei dem in Fig. 1b gezeigten Beispiel sind die Kontrastbereiche durch Kalibrationspartikel 4 gebildet, die mit einer vorgegebenen Verteilung (in einem Raster) auf der Oberfläche des Substrats 3 aufgebracht sind. Die Kalibrationspartikel 4 von benachbarten Spalten der rasterförmigen Anordnung unterscheiden sich durch ihre optischen Eigenschaften, im gezeigten Beispiel durch ihren (komplexen) Brechungsindex voneinander, d.h. diese bilden unterschiedliche Gruppen von Kalibrationspartikeln 4. In Fig. 1b sind die Gruppen von Kalibrationspartikeln 4 aus unterschiedlichen Materialien gebildet. In Fig. 1b ist beispielhaft eine erste Gruppe 4a von Kalibrationspartikeln 4 gezeigt, die aus einem metallischen Material, genauer gesagt aus Stahl, gebildet ist, eine zweite Gruppe 4b von Kalibrationspartikeln 4, die aus Sand (SiO₂) gebildet ist, und eine dritte Gruppe 4c von Kalibrationspartikeln 4, die aus einem Kunststoff (z.B. aus Polystyrol oder aus Latex) gebildet ist. Durch die unterschiedlichen Materialien der Kalibrationspartikel 4 kann der Partikelsensor 2 zur Charakterisierung von Partikeln aus unterschiedlichen Partikel-Materialien kalibriert werden.

Es ist ebenfalls möglich, dass die Kontrastbereiche 4 an der Kalibrationsscheibe 1 durch Kalibrationspartikel gebildet sind, die statistisch verteilt an der Oberfläche des Substrats 3 aufgebracht sind. In diesem Fall handelt es sich bei den Kontrastbereichen 4 um Kalibrationspartikel, d.h. um Partikel mit bekannter Größe. Zum Aufbringen der Kalibrationspartikel 4 können diese z.B. in geringer Konzentration in flüssigem, transparentem Klebstoff suspendiert werden und als dünne Schicht auf die Kalibrationsscheibe 1 bzw. auf das Substrat 3 aufgebracht werden. Nach dem Trocknen des Klebstoffs sind die Kalibrationspartikel 4 statistisch über die Kalibrationsscheibe 1 verteilt. Als Kalibrationspartikel 4 bieten sich in diesem Fall insbesondere sphärische, monodisperse Partikel bekannter Größe an, z.B. Polystyrol-Latex-Kügelchen.

Der Klebstoff oder ein Photolack kann auch mittels eines Dispensers auf das scheibenförmige Substrat 3 aufgebracht werden. Vor der Aushärtung (speziell mit UV-Licht oder im Ofen) formt dieser Photolack oder Klebstoff in Abhängigkeit von seiner Viskosität durch die Oberflächenspannung Kugelsegmente bis hin zu Halbkugeln, welche die Kalibrationspartikel 4 bilden. Die auf diese Weise erzeugte dreidimensionale Struktur der Kalibrationspartikel 4 ermöglicht die Annäherung an das Streuverhalten von Partikeln mit kugelförmiger Oberfläche und eignet sich daher insbesondere für einen Partikelsensor 2, der auf dem Prinzip der Streulichtmessung beruht. Die Strukturgröße der auf diese Weise erzeugten Kalibrationspartikel 4 hängt von den Prozessparametern u.a. bei der Aushärtung des Photolacks oder Klebstoffs ab und kann daher bei gegebenen Prozessparametern als bekannt vorausgesetzt werden. Das scheibenförmige Substrat 3 kann zusätzlich vor dem Aufbringen des Klebers gereinigt, beschichtet oder laserstrukturiert werden, so dass sich eine hydrophile oder hydrophobe Oberfläche zur angepassten Ausformung der Tröpfchen ergibt.

Der Partikelsensor 2 von Fig. 2a,b und von Fig. 3 weist auch eine Bewegungseinrichtung 14a, 14b auf, um bei der Kalibrierung die Kalibrationsscheibe 1 in der Kalibrationsebene KE zu bewegen. Bei dem in Fig. 2a gezeigten Partikelsensor 2 handelt es sich bei der Bewegungseinrichtung 14a um einen Elektromotor, der eine Motornabe 15 aufweist, die als Drehachse für die Kalibrationsscheibe 1 von Fig. 1a dient. Die in Fig. 1a gezeigte, kreisförmige Kalibrationsscheibe 1 ist drehbar gelagert und weist eine zentrische Bohrung auf, in welche die Motornabe 15 des Elektromotors 14a eingreift.

Für die Kalibrierung des Partikelsensors 2 wird die Kalibrationsscheibe 1 von Fig. 1a mit Hilfe des Elektromotors 14a in Drehung versetzt, wobei die Kontrastbereiche 4 sich annähernd linear durch den Kalibrationsfokus 10 hindurch bewegen. Die Kalibrationsscheibe 1 von Fig. 1a weist einen Durchmesser auf, der zwischen ca. 10 mm und ca. 100 mm liegen kann. Bei einer Umdrehung der Kalibrationsscheibe 1 kann ggf. nur ein einzelner Kontrastbereich 4 durchlaufen werden. In der Regel ist aber eine Mehrzahl von Kontrastbereichen 4 in Umfangsrichtung über die Kalibrationsscheibe 1 verteilt angeordnet; insbesondere können mehrere hundert Kontrastbereiche 4 an der Kalibrationsscheibe 1 angebracht werden und bei einer Umdrehung der Kalibrationsscheibe 1 den Kalibrationsfokus 10 durchlaufen. Die Kalibrationsscheibe 1 kann beispielsweise mit einer Frequenz zwischen 0,1 Hz und 200 Hz rotiert werden. Eine typische Größenordnung für den Durchmesser des Laserstrahls 8 am Kalibrationsfokus 10 liegt zwischen ca. 10 µm und ca. 5 mm, beispielsweise zwischen ca. 40 µm und ca. 100 µm.

Bei dem in Fig. 2b gezeigten Beispiel handelt es sich bei der Bewegungseinrichtung 14b um einen Piezo-Aktuator, der an einem seitlichen Rand der Kalibrationsscheibe 1 von Fig. 1b angreift, um diese entlang einer Verschieberichtung Y in der Kalibrationsebene KE zu verschieben. Die Kalibrationsscheibe 1 von Fig. 2b weist zur Vereinfachung der Verschiebung in der Kalibrationsebene KE eine rechteckige Geometrie auf. Auch bei der Verschiebung der Kalibrationsscheibe 1 in der Kalibrationsebene KE kann eine Partikel-Trajektorie der Kontrastbereiche 4 bzw. der Kalibrationspartikel simuliert werden. Der Piezo-Aktuator 14a kann die Kalibrationsscheibe 1 beispielsweise mit einer (einstellbaren) Frequenz zwischen 1 Hz und 100 Hz in der Kalibrationsebene KE verschieben und hierbei die Kalibrationspartikel bzw. die Kontrastbereiche 4 auslenken. Die Bewegung kann insbesondere gezielt innerhalb einer bestimmten Gruppe 4a-c von Kalibrationspartikeln 4 bzw. entlang einer bestimmten Spalte des rasterförmigen Musters auf der Kalibrationsscheibe 1 erfolgen.

Alternativ oder zusätzlich zur Bewegung der Kalibrationsscheibe 1 in der Kalibrationsebene KE kann auch der Kalibrationsfokus 10 in der Kalibrationsebene KE bewegt werden. Zu diesem Zweck kann der Sender 5 eine Bewegungseinrichtung z.B. in Form einer Scannereinrichtung aufweisen, welche einen oder mehrere Scannerspiegel, einen Akusto-optischen Modulator, einen Polygonspiegel, etc. zur Bewegung des Laserstrahls 8 und somit auch des Kalibrationsfokus 10 in der Kalibrationsebene KE umfasst.

Bei dem in Fig. 2a,b gezeigten Partikelsensor 2, der nicht Teil der beanspruchten Erfindung ist, wird die Kalibrationsscheibe KE außerhalb des Messbetriebs in dem Messvolumen 11 angeordnet, das während des Messbetriebs von Partikeln durchlaufen wird. Die Kalibrationsscheibe KE kann zu diesem Zweck automatisiert oder ggf. manuell in das Messvolumen 11 eingebracht werden.

Bei dem in Fig. 3 gezeigten Partikelsensor 2 kann die Kalibrierung im laufenden Betrieb (im Messbetrieb) erfolgen. Im Gegensatz zu dem in Fig. 2a,b gezeigten Partikelsensor 2 ist bei dem in Fig. 3 gezeigten Partikelsensor 2 die Kalibrationsebene KE nicht innerhalb des Messvolumens 11 angeordnet, das im Messbetrieb von den zu charakterisierenden Partikeln P durchlaufen wird, sondern diese ist im gezeigten Beispiel vielmehr in Strahlrichtung des Laserstrahls 8 von einer Messebene ME beabstandet, die in dem Messvolumen 11 gebildet ist. Zur Abbildung des Kalibrationsfokus 10 in der Kalibrationsebene KE und einer Messintensitätsverteilung in Form eines Messfokus 16 in der Messebene ME aufeinander weist der Partikelsensor 2, genauer gesagt der Empfänger 6 des Partikelsensors 2, eine abbildende Optik 17 auf. Die abbildende Optik 17 dient dazu, einen Doppelfokus mit vergleichbaren Strahlparametern (Strahlradius etc.) in der Kalibrationsebene KE bzw. in der Messebene ME zu erzeugen. Die abbildende Optik 17 kann zu diesem Zweck beispielsweise eine Kollimationseinrichtung und eine Fokussiereinrichtung umfassen, die beispielsweise in Form von Linsen oder (gekrümmten) Spiegeln ausgebildet sein kann.

Bei dem in Fig. 3 gezeigten Partikelsensor 2 dient eine Fokussieroptik 9 des Senders 5 zur Fokussierung des Laserstrahls 8 an dem Messfokus 16 in der Messebene ME. Grundsätzlich ist es möglich, die Rolle der Kalibrationsebene KE und der Messebene ME bei dem in Fig. 3 dargestellten Partikelsensor 2 zu vertauschen. In diesem Fall dient die Fokussieroptik 9 zur Fokussierung des Laserstrahls 8 auf einen Kalibrationsfokus 10 in der Kalibrationsebene KE. Die Kalibrationsscheibe 1 ist hierbei im Sender 5 und nicht im Empfänger 6 angeordnet, was sich für die Kalibration des Partikelsensors 2 jedoch als eher ungünstig herausgestellt hat.

Grundsätzlich ist es möglich, dass die Kalibrationsscheibe 1 dauerhaft im Strahlengang des Laserstrahls 8 verbleibt, um eine Kalibrierung im laufenden Messbetrieb zu ermöglichen. Dies ist sinnvoll, wenn die Messung (z.B. auf Verklumpungen in einem Fluid) nicht unterbrochen werden soll, so dass eine 100%ige Prüfung durchgeführt werden kann. In diesem Fall ist es erforderlich, während der laufenden Messung die Partikel P, die das Messvolumen 11 durchlaufen, von den Kalibrationspartikeln 4 zu unterscheiden. Dies ist beispielsweise möglich, wenn sich die Kalibrationspartikel 4 in mindestens einer optischen Eigenschaft von den Partikeln P in dem Messvolumen 11 unterscheiden. Eine solche Unterscheidung ist auch bei gleichen optischen Eigenschaften möglich, sofern die Anordnung der Kalibrationspartikel 4 auf der Kalibrationsscheibe 1 bekannt ist, vorausgesetzt, dass es nicht zu viele Koinzidenzen von Partikeln P im Messvolumen 11 und auf der Kalibrationsscheibe 1 gibt. Das Muster, in dem die Kalibrationspartikel 4 auf der Kalibrationsscheibe 1 angeordnet sind, kann so speziell gewählt werden, dass die zeitliche Abfolge der von den Kalibrationspartikeln 4 hervorgerufenen Intensitätssignale bei der Auswertung in der Auswerteeinrichtung 13 von den Intensitätssignalen der zu messenden Partikeln P unterschieden werden können.

Alternativ kann die Kalibrationsscheibe 1 automatisiert in den Strahlengang des Laserstrahls 8 eingebracht werden, um die Kalibration durchzuführen und die Kalibrationsscheibe kann wieder aus dem Strahlengang des Laserstrahls entfernt werden, sobald die Kalibration abgeschlossen ist. Für das Ein- und Ausbringen der Kalibrationsscheibe 1 in den Strahlengang kann die Bewegungseinrichtung 14b verwendet werden, es ist aber auch möglich, dass zu diesem Zweck eine weitere Bewegungseinrichtung in dem Sender 5 vorgesehen ist.

Durch die Kenntnis der Strahlradien des Laserstrahls 8 der Kalibrationsintensitätsverteilung bzw. des Kalibrationsfokus 10 und der Messintensitätsverteilung bzw. des Messfokus 16 lässt sich nach der Kalibration die Größe der Partikel P im Messvolumen 11 berechnen. Es versteht sich, dass neben der Größe der Partikel P auch eine Kalibration anderer Messgrößen der Partikel P durchgeführt werden kann. Bei diesen Messgrößen kann es sich beispielsweise um die Partikel-Position, die Partikel-Geschwindigkeit, etc., handeln. Die Kalibrierung dieser Messgrößen ist möglich, weil die Kalibrationsscheibe 1 mit Hilfe der jeweiligen Bewegungseinrichtung 14a, 14b in der Kalibrationsebene KE bewegt wird.

Die Charakterisierung der Partikel P (und der Kalibrationspartikel 4) erfolgt in der Auswerteeinrichtung 13 des Empfängers 6 des Partikelsensors 2. Bei dem Detektor 12 zur Erfassung der Intensitätssignale I_{T}, I_{R} des Laserstrahls 8 kann es sich um einen ortsauflösenden Detektor handeln, beispielsweise um einen CCD-Detektor, dies ist aber nicht zwingend erforderlich. Beispielsweise kann der Detektor 12 zur nicht ortsaufgelösten Erfassung von mehreren polarisationsabhängigen Intensitätssignalen ausgebildet sein, welche die Charakterisierung der Partikel P ermöglichen, wie dies in der weiter oben zitierten Patentanmeldung DE 10 2019 209 213.6 beschrieben ist. Der Detektor 12 kann in diesem Fall beispielsweise mehrere Photodioden aufweisen.

Der in Zusammenhang mit Fig. 2a,b und Fig. 3 beschriebene Partikelsensor 2 kann zur Charakterisierung von Partikeln P in einer Vielzahl von unterschiedlichen Anwendungen eingesetzt werden. Nachfolgend wird beispielhaft anhand von **Fig. 4** eine solche Anwendung anhand einer EUV-Strahlungserzeugungsvorrichtung 30 näher beschrieben. Die EUV-Strahlungserzeugungsvorrichtung 30 umfasst eine Strahlquelle 31, eine Verstärkeranordnung 32 mit drei optischen Verstärkern bzw. Verstärkerstufen 33a-c, eine nicht näher dargestellte Strahlführungseinrichtung 34 sowie eine Fokussiereinrichtung 35. Die Fokussiereinrichtung 35 dient dazu, einen von der Strahlquelle 31 erzeugten und von den Verstärkeranordnung 32 verstärkten Treiber-Laserstrahl 31a an einem Zielbereich 36 in einer Vakuum-Kammer 38 zu fokussieren, in der Partikel P eingebracht sind. Die Partikel P bzw. ein einzelner Zinn-Tropfen, dient als Target-Material und wird mittels des Treiber-Laserstrahls 31a bestrahlt. Der Zinn-Tropfen geht hierbei in einen Plasma-Zustand über und emittiert EUV-Strahlung, die mittels eines Kollektorspiegels 37 fokussiert wird. Bei dem in Fig. 4 gezeigten Beispiel weist der Kollektorspiegel 37 eine Öffnung zum Durchtritt des Laserstrahls 31a auf. Die Strahlquelle 31 weist im gezeigten Beispiel zwei CO₂-Laser auf, um einen Vor-Puls und einen Haupt-Puls zu erzeugen, die gemeinsam in der Verstärkeranordnung 32 verstärkt und auf den Zielbereich 36 fokussiert werden. Die Strahlquelle 31 bildet gemeinsam mit der Verstärkeranordnung 32 eine Treiberlaseranordnung 39 der EUV-Strahlungserzeugungsvorrichtung 30.

Wie in Fig. 4 ebenfalls zu erkennen ist, sind an der Vakuum-Kammer 38 der Sender 5 und der Empfänger 6 des Partikelsensors 2 angebracht, so dass die Vakuum-Kammer 38 eine Messkammer für den Partikelsensor 2 bildet. Das Messvolumen 11, in dem die Messebene ME gebildet ist, verläuft durch den Zielbereich 36 mit den Partikeln P in Form von Zinn-Tröpfchen. Mit Hilfe des Partikelsensors 2 können die Partikel P bzw. deren Bewegung zu dem Zielbereich 36 untersucht und deren Bewegung bzw. Trajektorie bestimmt werden. Auch die Größe der Partikel P bzw. die Größe von beim Zerstäuben eines jeweiligen Zinn-Tröpfchens durch den Treiber-Laserstrahls 31a erzeugten, kleineren Partikeln kann mit Hilfe des Partikelsensors 2 bestimmt werden. Auch die Trajektorien bzw. die Geschwindigkeit der beim Zerstäuben erzeugten Partikel P kann mittels des Partikelsensors 2 detektiert werden.

Wie in Fig. 4 ebenfalls zu erkennen ist, ist der Sender 5 durch ein Gehäuse 23 gegenüber der Umgebung abgeschirmt. Entsprechend ist auch der Empfänger 6 durch ein Gehäuse 24 gegen die Umgebung abgeschirmt. Für den Austritt des Laserstrahls 8 ist an dem Gehäuse 23 des Senders 2 ein Austrittsfenster 21a gebildet. Am Gehäuse 24 des Empfängers 6 ist entsprechend ein Eintrittsfenster 21b zum Eintritt des Laserstrahls 8 in den Empfänger 6 nach dem Durchlaufen des Messvolumens 11 gebildet. Die Fenster 21a,b ermöglichen es, den Sender 5 und den Empfänger 6 gegenüber der Umgebung abzuschirmen, so dass der Partikelsensor 2 zur Detektion von unterschiedlichen flüssigen, gasförmigen oder festen Medien verwendet werden kann. Bei dem in Fig. 4 gezeigten Partikelsensor 2 wird somit auch die Kalibrationsscheibe 1 von dem Gehäuse 23 des Senders 5 gegenüber dem Messvolumen 11 abgeschirmt und somit vor den Partikeln P geschützt, die das Messvolumen 11 durchlaufen.

## Patentansprüche

1. Verfahren zum Kalibrieren eines Partikelsensors (2), umfassend:
Ausrichten, insbesondere Fokussieren, eines Lichtstrahls, insbesondere eines Laserstrahls (8), auf eine Kalibrationsebene (KE) zur Erzeugung einer Kalibrationsintensitätsverteilung (10), insbesondere eines Kalibrationsfokus, in der Kalibrationsebene (KE), wobei in der Kalibrationsebene (KE) eine Kalibrationsscheibe (1) angeordnet ist, an der Kontrastbereiche (2) zur Modulation der Intensität (I) des Lichtstrahls, insbesondere des Laserstrahls (8), gebildet sind,
Bewegen der Kalibrationsscheibe (1) und/oder der Kalibrationsintensitätsverteilung (10) in der Kalibrationsebene (KE), Erfassen mindestens eines Intensitätssignals (I_{T}; I_{R}) des Lichtstrahls, insbesondere des Laserstrahls (8), nach dem Durchlaufen der Kalibrationsebene (KE),
sowie
Kalibrieren des Partikelsensors (2) durch Auswerten des mindestens einen Intensitätssignals (I_{T}; I_{R}),
**dadurch gekennzeichnet,**
**dass** die Kalibrationsintensitätsverteilung (10) in der Kalibrationsebene (KE) und eine Messintensitätsverteilung (16), insbesondere ein Messfokus, in einer Messebene (ME) aufeinander abgebildet werden, wobei die Messebene (ME) in einem Messvolumen (11) angeordnet ist, das im Messbetrieb des Partikelsensors (2) von den Partikeln (P) durchlaufen wird.

2. Verfahren nach Anspruch 1, bei dem die Kalibrationsscheibe (1) in einem vom Messvolumen (11) separierten Gehäuse (23) angeordnet ist.

3. Verfahren nach Anspruch 1 oder 2, bei dem die Kontrastbereiche (4) an der Kalibrationsscheibe (1) unterschiedliche Flächeninhalte aufweisen.

4. Verfahren nach einem der vorhergehenden Ansprüche, bei dem die Kontrastbereiche durch Mikrostrukturen (4) an der Oberfläche eines Substrats (3), insbesondere eines Wafers, gebildet sind.

5. Verfahren nach einem der Ansprüche 1 bis 4, bei dem die Kontrastbereiche durch Kalibrationspartikel (4) gebildet sind, wobei die Kalibrationspartikel (4) bevorzugt mindestens zwei Gruppen (4a-c) von Kalibrationspartikeln (4) mit unterschiedlichen optischen Eigenschaften aufweisen, die insbesondere aus unterschiedlichen Materialien gebildet sind.

6. Verfahren nach Anspruch 5, bei dem die Kalibrationspartikel (4) statistisch verteilt an der Oberfläche eines Substrats (3), insbesondere eines Wafers, aufgebracht sind und/oder bei dem die Kalibrationspartikel (4) durch Selbststrukturierung an der Oberfläche des Substrats (3) gebildet werden.

7. Verfahren nach einem der vorhergehenden Ansprüche, bei dem die Kalibrationsscheibe (1) beim Bewegen in der Kalibrationsebene (KE) automatisiert gedreht und/oder automatisiert verschoben wird.

8. Partikelsensor (2), umfassend:
einen Sender (5), der eine Lichtquelle, insbesondere eine Laserquelle (7), zur Erzeugung eines Lichtstrahls, insbesondere eines Laserstrahls (8), aufweist, eine Optik (9; 9, 17) zur Ausrichtung, insbesondere zur Fokussierung, des Lichtstrahls, insbesondere des Laserstrahls (8), auf eine Kalibrationsebene (KE) zur Erzeugung einer Kalibrationsintensitätsverteilung (10), insbesondere eines Kalibrationsfokus, in der Kalibrationsebene (KE), wobei in der Kalibrationsebene (KE) eine Kalibrationsscheibe (1) angeordnet ist, an der Kontrastbereiche (4) zur Modulation der Intensität (I) des Lichtstrahls, insbesondere des Laserstrahls (8), gebildet sind,
eine Bewegungseinrichtung (14a; 14b) zur Bewegung der Kalibrationsscheibe (1) und/oder der Kalibrationsintensitätsverteilung (10) in der Kalibrationsebene (KE), einen Empfänger (6), der einen Detektor (12) zum Erfassen mindestens eines Intensitätssignals (I_{T}, I_{R}) des Lichtstrahls, insbesondere des Laserstrahls (8), nach dem Durchlaufen der Kalibrationsebene (KE) aufweist, sowie eine Auswerteeinrichtung (13) zur Auswertung des mindestens einen Intensitätssignals (I_{T}, I_{R}) zur Kalibration des Partikelsensors (2) in einem Kalibrationsbetrieb des Partikelsensors (2),
**dadurch gekennzeichnet,**
**dass** die Optik (9, 17) eine abbildende Optik (17) zum Abbilden der Kalibrationsintensitätsverteilung (10) in der Kalibrationsebene (KE) und einer Messintensitätsverteilung (16), insbesondere eines Messfokus, in einer Messebene (ME) aufeinander umfasst, wobei die Messebene (ME) in einem Messvolumen (11) gebildet ist, das in einem Messbetrieb des Partikelsensors (2) von den Partikeln (P) durchlaufen wird.

9. Partikelsensor nach Anspruch 8, bei dem der Sender (5) ein Gehäuse (23) mit einem Austrittsfenster (21a) aufweist und bei dem der Empfänger (6) ein Gehäuse (24) mit einem Eintrittsfenster (21b) aufweist, zwischen denen das Messvolumen (11) gebildet ist.

10. Partikelsensor nach einem der Ansprüche 8 oder 9, bei dem die Bewegungseinrichtung (14a) zur Drehung der Kalibrationsscheibe (1) in der Kalibrationsebene (KE) ausgebildet ist.

11. Partikelsensor nach einem der Ansprüche 8 bis 10, bei dem die Bewegungseinrichtung (14b) zur Verschiebung der Kalibrationsscheibe (1) in der Kalibrationsebene (KE) ausgebildet ist.

12. Vorrichtung, insbesondere EUV-Strahlungserzeugungsvorrichtung (30), umfassend:
eine Messkammer (38), der Partikel (P) zuführbar sind, sowie einen Partikelsensor (1) nach einem der Ansprüche 8 bis 11 zur Charakterisierung der Partikel (P) in der Messkammer (38).

## Claims

1. Method for calibrating a particle sensor (2), comprising:
aligning, in particular focusing, a light beam, in particular a laser beam (8), onto a calibration plane (KE) to generate a calibration intensity distribution (10), in particular a calibration focus, in the calibration plane (KE), a calibration disc (1) being arranged in the calibration plane (KE), on which disc contrast regions (2) are formed to modulate the intensity (I) of the light beam, in particular the laser beam (8),
moving the calibration disc (1) and/or the calibration intensity distribution (10) in the calibration plane (KE), detecting at least one intensity signal (I_{T}; I_{R}) of the light beam, in particular the laser beam (8), after passing through the calibration plane (KE),
and
calibrating the particle sensor (2) by evaluating the at least one intensity signal (I_{T}; I_{R}),
**characterized in that**
the calibration intensity distribution (10) in the calibration plane (KE) and a measurement intensity distribution (16), in particular a measurement focus, in a measurement plane (ME) are mapped onto each other, the measurement plane (ME) being arranged in a measurement volume (11) which the particles (P) pass through during the measurement operation of the particle sensor (2).

2. Method according to claim 1, in which the calibration disc (1) is arranged in a housing (23) separated from the measurement volume (11).

3. Method according to claim 1 or 2, in which the contrast regions (4) on the calibration disc (1) have different surface areas.

4. Method according to any of the preceding claims, in which the contrast regions are formed by microstructures (4) on the surface of a substrate (3), in particular a wafer.

5. Method according to any of claims 1 to 4, in which the contrast regions are formed by calibration particles (4), wherein the calibration particles (4) preferably have at least two groups (4a-c) of calibration particles (4) which have different optical properties and are formed in particular from different materials.

6. Method according to claim 5, in which the calibration particles (4) are applied statistically distributed on the surface of a substrate (3), in particular a wafer, and/or in which the calibration particles (4) are formed by self-structuring on the surface of the substrate (3).

7. Method according to any of the preceding claims, in which the calibration disc (1) is automatically rotated and/or automatically moved when moving in the calibration plane (KE).

8. Particle sensor (2) comprising:
a transmitter (5) which has a light source, in particular a laser source (7), for generating a light beam, in particular a laser beam (8), an optical unit (9; 9, 17) for aligning, in particular focusing, the light beam, in particular the laser beam (8), onto a calibration plane (KE) to generate a calibration intensity distribution (10), in particular a calibration focus, in the calibration plane (KE), a calibration disc (1) being arranged in the calibration plane (KE), on which disc contrast regions (4) are formed to modulate the intensity (I) of the light beam, in particular the laser beam (8),
a movement device (14a; 14b) for moving the calibration disc (1) and/or the calibration intensity distribution (10) in the calibration plane (KE), a receiver (6) which has a detector (12) for detecting at least one intensity signal (I_{T}; I_{R}) of the light beam, in particular the laser beam (8), after passing through the calibration plane (KE), and an evaluation device (13) for evaluating the at least one intensity signal (I_{T}; I_{R}) to calibrate the particle sensor (2) in a calibration operation of the particle sensor (2),
**characterized in that**
the optical unit (9, 17) comprises an imaging optics (17) for imaging the calibration intensity distribution (10) in the calibration plane (KE) and a measurement intensity distribution (16), in particular a measurement focus, in a measurement plane (ME), the measurement plane (ME) being formed in a measurement volume (11) which the particles (P) pass through during the measurement operation of the particle sensor (2).

9. Particle sensor according to claim 8, in which the transmitter (5) has a housing (23) having an exit window (21a) and in which the receiver (6) has a housing (24) having an entry window (21b), between which the measurement volume (11) is formed.

10. Particle sensor according to any of claims 8 or 9, in which the movement device (14a) is designed to rotate the calibration disc (1) in the calibration plane (KE).

11. Particle sensor according to any of claims 8 to 10, in which the movement device (14b) is designed to rotate the calibration disc (1) in the calibration plane (KE).

12. Apparatus, in particular EUV radiation generating apparatus (30), comprising:
a measurement chamber (38) to which particles (P) can be supplied, and a particle sensor (1) according to any of claims 8 to 11 for characterizing the particles (P) in the measurement chamber (38).

## Revendications

1. Procédé permettant l'étalonnage d'un capteur de particules (2), comprenant:
l'orientation, en particulier la concentration, d'un faisceau lumineux, en particulier d'un faisceau laser (8), vers un plan d'étalonnage (KE) pour la génération d'une distribution d'intensité d'étalonnage (10), en particulier d'un foyer d'étalonnage, dans le plan d'étalonnage (KE), dans lequel un disque d'étalonnage (1) est disposé dans le plan d'étalonnage (KE), sur lequel disque d'étalonnage sont formées des zones de contraste (2) destinées à moduler l'intensité (I) du faisceau lumineux, en particulier du faisceau laser (8),
le déplacement du disque d'étalonnage (1) et/ou de la distribution d'intensité d'étalonnage (10) dans le plan d'étalonnage (KE), la détection d'au moins un signal d'intensité (I_{T}; I_{R}) du faisceau lumineux, en particulier du faisceau laser (8), après son passage à travers le plan d'étalonnage (KE),
ainsi que
l'étalonnage du capteur de particules (2) par analyse de l'au moins un signal d'intensité (I_{T}; I_{R}),
**caractérisé en ce**
**que** la distribution d'intensité d'étalonnage (10) dans le plan d'étalonnage (KE) et une distribution d'intensité de mesure (16), en particulier un foyer de mesure, dans un plan de mesure (ME) sont représentées l'une par rapport à l'autre, dans lequel le plan de mesure (ME) est disposé dans un volume de mesure (11) traversé par les particules (P) dans le mode de fonctionnement de mesure du capteur de particules (2).

2. Procédé selon la revendication 1, dans lequel le disque d'étalonnage (1) est disposé dans un boîtier (23) séparé du volume de mesure (11).

3. Procédé selon la revendication 1 ou 2, dans lequel les zones de contraste (4) sur le disque d'étalonnage (1) présentent des aires différentes.

4. Procédé selon l'une des revendications précédentes, dans lequel les zones de contraste sont formées par des microstructures (4) sur la surface d'un substrat (3), en particulier d'une plaquette.

5. Procédé selon l'une des revendications 1 à 4, dans lequel les zones de contraste sont formées par des particules d'étalonnage (4), dans lequel les particules d'étalonnage (4) présentent de préférence au moins deux groupes (4a-c) de particules d'étalonnage (4) comportant des propriétés optiques différentes et en particulier formées à partir de matériaux différents.

6. Procédé selon la revendication 5, dans lequel les particules d'étalonnage (4) sont appliquées de manière à être réparties de manière statistique sur la surface d'un substrat (3), en particulier d'une plaquette, et/ou dans lequel les particules d'étalonnage (4) sont formées par autostructuration sur la surface du substrat (3).

7. Procédé selon l'une des revendications précédentes, dans lequel le disque d'étalonnage (1) est automatiquement mis en rotation et/ou automatiquement décalé lors de son déplacement dans le plan d'étalonnage (KE).

8. Capteur de particules (2), comprenant:
un émetteur (5) qui présente une source lumineuse, en particulier une source laser (7), pour la génération d'un faisceau lumineux, en particulier d'un faisceau laser (8), une optique (9; 9, 17) pour l'orientation, en particulier la concentration, du faisceau lumineux, en particulier du faisceau laser (8), vers un plan d'étalonnage (KE) pour la génération d'une distribution d'intensité d'étalonnage (10), en particulier d'un foyer d'étalonnage, dans le plan d'étalonnage (KE), dans lequel un disque d'étalonnage (1) est disposé dans le plan d'étalonnage (KE), sur lequel disque d'étalonnage sont formées des zones de contraste (4) destinées à moduler l'intensité (I) du faisceau lumineux, en particulier du faisceau laser (8),
un appareil de déplacement (14a; 14b) pour le déplacement du disque d'étalonnage (1) et/ou de la distribution d'intensité d'étalonnage (10) dans le plan d'étalonnage (KE), un récepteur (6) qui présente un détecteur (12) pour la détection d'au moins un signal d'intensité (I_{T}; I_{R}) du faisceau lumineux, en particulier du faisceau laser (8), après son passage à travers le plan d'étalonnage (KE), ainsi qu'un appareil d'évaluation (13) pour l'évaluation de l'au moins un signal d'intensité (I_{T}; I_{R}) pour l'étalonnage du capteur de particules (2) dans un mode de fonctionnement d'étalonnage du capteur de particules (2),
**caractérisé en ce**
**que** l'optique (9, 17) comprend une optique de reproduction (17) pour la reproduction de la distribution d'intensité d'étalonnage (10) dans le plan d'étalonnage (KE) et d'une distribution d'intensité de mesure (16), en particulier d'un foyer de mesure, dans un plan de mesure (ME) l'une par rapport à l'autre, dans lequel le plan de mesure (ME) est formé dans un volume de mesure (11) traversé par les particules (P) dans un mode de fonctionnement de mesure du capteur de particules (2).

9. Capteur de particules selon la revendication 8, dans lequel l'émetteur (5) présente un boîtier (23) comportant une fenêtre de sortie (21a) et dans lequel le récepteur (6) présente un boîtier (24) comportant une fenêtre d'entrée (21b), entre lesquels est formé le volume de mesure (11).

10. Capteur de particules selon l'une des revendications 8 ou 9, dans lequel l'appareil de déplacement (14a) est conçu pour faire tourner le disque d'étalonnage (1) dans le plan d'étalonnage (KE).

11. Capteur de particules selon l'une des revendications 8 à 10, dans lequel l'appareil de déplacement (14b) est conçu pour décaler le disque d'étalonnage (1) dans le plan d'étalonnage (KE).

12. Dispositif, en particulier dispositif de génération de rayonnement UV extrême (30), comprenant:
une chambre de mesure (38) à laquelle des particules (P) peuvent être acheminées, ainsi qu'un capteur de particules (1) selon l'une des revendications 8 à 11 permettant de caractériser les particules (P) dans la chambre de mesure (38).
